(19) Europäisches Patentamt
European Patent Office
Office européen des brevets

(11) EP 0 884 613 B1

(12) **FASCICULE DE BREVET EUROPEEN**

(45) Date de publication et mention
de la délivrance du brevet:
**11.04.2001 Bulletin 2001/15**

(51) Int Cl.⁷: **G02B 6/16**

(21) Numéro de dépôt: **98401387.0**

(22) Date de dépôt: **09.06.1998**

(54) **Banc de photoinscription de réseaux de bragg apodisés**

Vorrichtung zum lichtinduzierten Schreiben von apodisierten Bragg Gittern

Apparatus for photo writing apodised Bragg gratings

(84) Etats contractants désignés:
**DE GB**

(30) Priorité: **10.06.1997 FR 9707189**

(43) Date de publication de la demande:
**16.12.1998 Bulletin 1998/51**

(73) Titulaire: **FRANCE TELECOM**
**75015 Paris (FR)**

(72) Inventeurs:
• **Quetel, Lionel**
**94230 Cachan (FR)**

• **Rivoallan, Loic**
**94230 Cachan (FR)**

(74) Mandataire: **Ballot, Paul**
**Cabinet Ballot-Schmit,**
**16, Avenue du Pont Royal**
**94250 Cachan (FR)**

(56) Documents cités:
**EP-A- 0 805 365          WO-A-96/36895**
**GB-A- 2 302 599**

**EP 0 884 613 B1**

**Description**

L'invention concerne un banc de photoinscription pour la réalisation de réseaux de Bragg.

Elle trouve une application dans les différents procédés de photoinscription de réseaux de Bragg réalisés sur tous types de guides optiques photosensibles et notamment sur fibre optique.

On parlera dans la suite indifféremment de guide optique photosensible ou de fibre optique, étant bien entendu qu'un tronçon de fibre n'est autre qu'un guide optique.

On rappelle qu'un banc de photoinscription pour la réalisation de réseaux de Bragg comporte de manière connue une source de rayonnement 1 apte à insoler un guide optique ou fibre optique 4. L'insolation se fait au moyen d'un dispositif optique 2 permettant l'obtention d'un champ d'interférence.

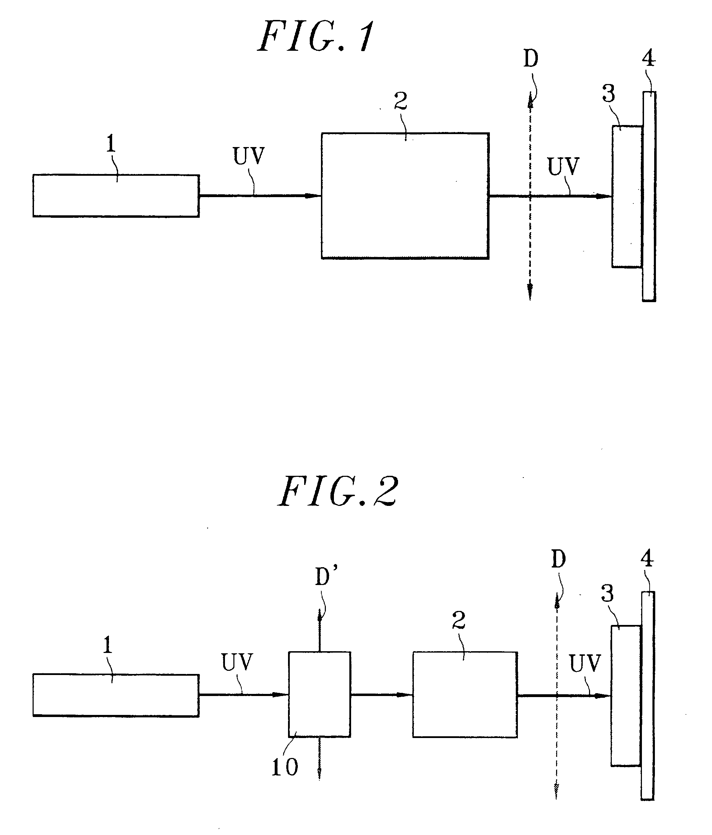

Le schéma de principe d'un banc de photoinscription est représenté sur la figure 1.

La photoinscription d'un réseau de Bragg consiste à insoler une fibre par un système de franges d'interférences ultraviolettes afin de créer une variation permanente d'indice du coeur de la fibre, qui est périodique le long de son axe. La profondeur de modulation d'indice est fonction de la puissance reçue ainsi que du temps d'exposition.

Les franges d'interférences peuvent être obtenues par différentes méthodes, à savoir l'utilisation d'un masque de phase ou une méthode d'interférométrie.

L'inscription peut être obtenue soit en opérant un balayage du faisceau UV devant le guide , soit à l'aide d'un faisceau étendu c'est à dire à l'aide d'un faisceau qui irradie tout le guide.

Sur cette figure 1 on a considéré que l'on utilisait un faisceau UV de faible largeur et l'on a symbolisé le déplacement de ce faisceau par la flèche D en pointillé .

La référence 3 symbolise le champ d'interférence obtenu par le système optique 2.

Ces dernières années, la réalisation de réseaux de Bragg s'est développée.

En effet ces réseaux utilisés en réflexion ou en transmission sont introduits dans de nombreuses fonctions optiques telles que des lasers, des démultiplexeurs, des compensateurs de dispersion chromatique, des capteurs.

Leurs utilisations dans certaines applications ont fait apparaître certaines nécessités sur leurs caractéristiques. Un réseau de Bragg classique présente un spectre en réflexion possédant une diaphotie importante, c'est-à-dire une réflexion résiduelle en dehors de la bande. De plus, la réflexion au voisinage de la longueur d'onde de Bragg n'est pas constante. Les réseaux compensateurs de dispersion chromatique doivent posséder une dispersion linéaire. Cet ensemble de contraintes nécessite d'apodiser les réseaux, c'est-à-dire de créer une variation continue de la profondeur de modulation d'indice aux extrémités du réseau. Différentes méthodes d'apodisation ont déjà été proposées.

Une première solution consiste par exemple à brouiller les franges d'interférences aux extrémités du réseau. On pourra se reporter pour plus de détails au document [1] intitulé " Simple technique for apodising chirped and unchirped fibre Bragg gratings " publié dans ELECTRONICS LETTERS 20th June 1996 Vol.32 N°.13 ou au document [2] intitulé " Moving fibre/phase mask-scanning beam technique for enhanced flexibility in producing fibre gratings with uniform phase mask " publié par EIECTRONICS LETTERS 17th August 1995 Vol.31 N°17.

Une deuxième solution consiste à utiliser un masque de phase spécifique ayant un rendement de diffraction variable. On pourra se reporter pour plus de détails au document [3] intitulé " Apodisation of the spectral response of fibre Bragg gratings using a phase mask with variable diffraction efficiency " publié dans ELECTRONICS LETTERS 2nd February 1995 Vol.31 N°3.

Une troisième solution consiste à faire varier l'intensité en utilisant un faisceau large ayant un profil adapté: par exemple, un profil gaussien; ou en utilisant un masquage de faisceau et en procédant par exemple à une double exposition du guide. La première exposition se fait en présence d'un masque et en l'absence du masque de phase et la deuxième se fait en présence du masque de phase et d'un deuxième masque formant un profil de faisceau en "forme de cloche", complémentaire au masque de la première exposition. Cette double exposition permet d'obtenir une élévation d'indice moyen constante le long du réseau. On pourra se reporter pour plus de détail au document [4] intitulé "Apodised in-fibre Bragg grating reflectors photoimprinted using a phase masque" publié par Electronics letters 2nd February 1995 Vol.31 N°3, pages 223-225.

Cette dernière technique est lourde à mettre en oeuvre, de plus les techniques actuelles de variation de puissance le long du réseau par masquage ou par utilisation de faisceau large à profil adapté n'autorisent pas une bonne reproductibilité du profil de puissance UV le long de la fibre.

Les techniques utilisant un brouillage de franges aux extrémités du réseau lors de la photoinscription ne permettent pas le contrôle rigoureux du profil de la profondeur de modulation souhaitée. De plus, tous les types de profils ne peuvent pas être obtenus.

Les masques de phase à rendement de diffraction variable ne sont utilisables que pour un seul modèle de réseau, chaque modèle réclame un masque différent.

On pourra se reporter au document GB 2 302 599 constituant l'état de la technique le plus proche correspondant au préambule de la revendication 1.

La présente invention permet de remédier à ces inconvénients. Elle a plus particulièrement pour objet un banc de photoinscription selon la revendication 1.

Avantageusement, le dispositif de masquage à surface variable comporte au moins un cache rotatif de forme donnée pour un profil d'intensité désiré, et des moyens pour déplacer ce dispositif de masquage devant le faisceau UV.

Selon un mode de réalisation, le cache a une forme carrée qui lorsque ce dernier est mis en rotation et qu'il est déplacé en translation devant le faisceau, permet d'obtenir un profil en forme de créneau à bords atténués pour la puissance UV reçue par le guide ou la fibre.

Selon un autre mode de réalisation, le cache a une forme de double fer de pique qui lorsque ce dernier est mis en rotation et déplacé devant le faisceau, permet d'obtenir un profil en créneau à bords sinusoïdaux pour la puissance UV reçue par le guide ou la fibre.

D'autres avantages et particularités de l'invention apparaîtront à la lecture de la description qui est donnée à titre illustratif et nullement limitatif et en regard des dessins sur lesquels :

- la figure 1, représente le schéma de principe d'un banc de photoinscription selon l'état de la technique,
- la figure 2, représente le schéma de principe d'un banc de photoinscription selon l'invention,
- la figure 3, représente un banc de photoinscription selon un exemple d'implantation,
- les figures 4 et 5, représentent un schéma d'un dispositif de masquage à surface variable selon un premier mode de réalisation pour le cache,
- la figure 6, représente le schéma d'un cache selon un deuxième mode de réalisation,
- la figure 7, représente le schéma de la courbe de variation de la puissance du rayon ultraviolet après masquage par le cache représenté sur la figure 6,
- la figure 8, représente le schéma du profil de variation de puissance du rayon ultraviolet le long du guide, avec un cache selon la figure 6,
- la figure 9, représente le schéma d'un cache selon un troisième mode de réalisation,
- la figure 10, représente le schéma de la courbe de variation de la puissance du rayon ultraviolet après masquage par le cache représenté sur la figure 9,
- la figure 11, représente le schéma du profil de variation de puissance du rayon ultraviolet le long du guide avec un cache selon la figure 9,
- les figures 12 et 13 sont des figures géométriques données afin d'illustrer la relation entre la forme du cache et la puissance lumineuse transmise.

L'invention permet de créer une variation de puissance moyenne UV le long de la fibre afin de créer une variation de la profondeur de modulation le long du réseau formé. A cette fin un dispositif de masquage à surface variable 10 est placé dans le faisceau UV.

Du fait de ses variations de surface face au faisceau UV, ce dispositif réalise un masquage "dynamique" pendant la photoinscription. Ce dispositif est dénommé ci-après dispositif d'apodisation car il permet avantageusement de réaliser une apodisation.

Ce dispositif d'apodisation 10 peut être placé soit avant le dispositif d'interférométrie 2 soit après la formation des franges d'interférences. Il sera de préférence placé avant c'est à dire entre la source lumineuse 1 et le dispositif 2, lorsque ce dispositif 2 est un dispositif à masquage de phase afin de permettre de placer ce dernier suffisamment près du guide.

Le dispositif d'apodisation 10 pourra être placé après le dispositif de formation de franges d'interférences.

Selon l'invention le dispositif d'apodisation 10 est déplacé pendant la photoinscription devant le faisceau UV, tel que cela est symbolisé par la flèche D' et il présente une surface de masquage variable au cours du déplacement pour obtenir une variation de puissance moyenne le long de la fibre pendant ladite photoinscription du réseau.

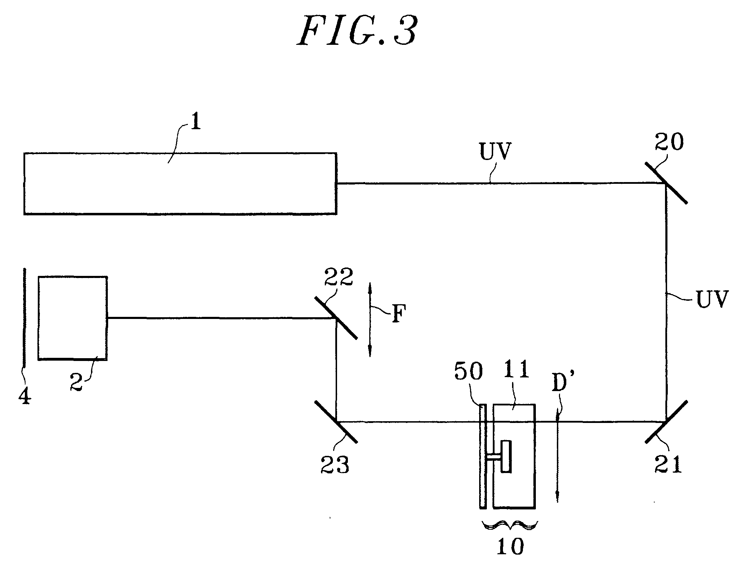

La figure 3 illustre une configuration possible d'un banc de photoinscription dans le cas où l'on utilise un faisceau étroit à balayage. Ce balayage est fait au niveau du miroir de renvoi 22 par une translation de ce miroir 22 selon la flèche F. Le faisceau arrive sur le miroir 22, après renvoi par le miroir 23, selon cet exemple de réalisation.

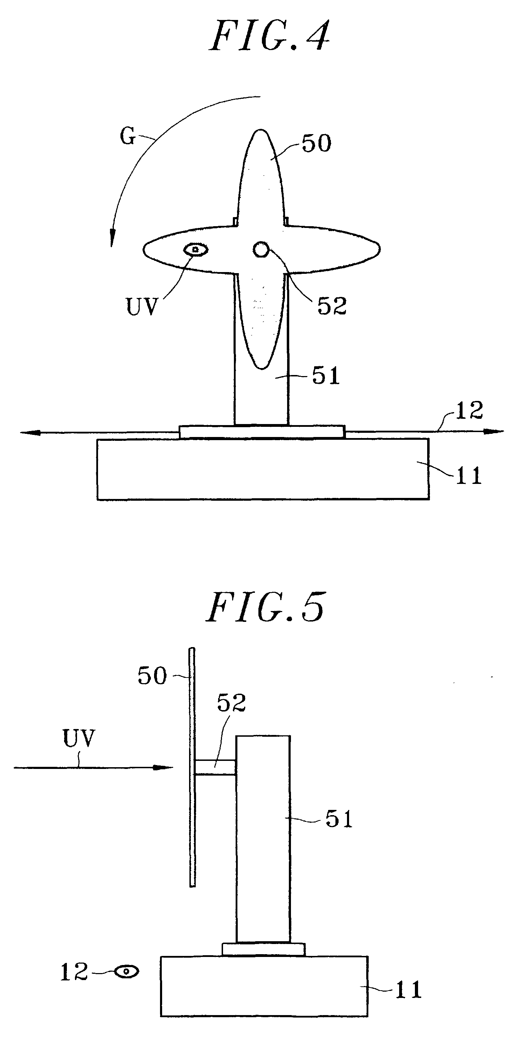

Le dispositif d'apodisation 10 est placé sur le trajet du faisceau. Il comporte une table de translation 11 sur laquelle est monté un moteur tournant à une fréquence quelconque comme cela sera détaillé à partir des figures 4 et 5.

Le dispositif se déplace en translation dans le faisceau grâce à la table 11 et permet de masquer le faisceau UV pendant un temps variable fonction de la vitesse de déplacement de la table.

De façon pratique pour réaliser une apodisation il faut que la puissance du faisceau soit continûment atténuée aux extrémités du réseau.

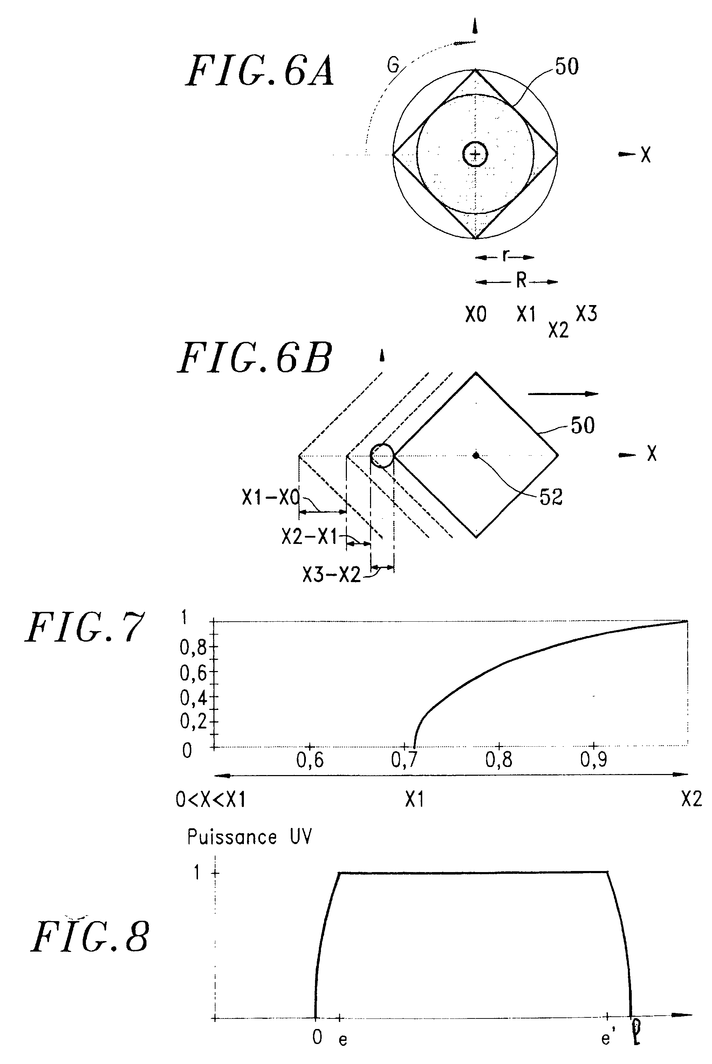

Pour cela, cf. figures 6 à 8 et 9 à 11, le dispositif d'apodisation 10 va être déplacé devant le faisceau pendant l'opération de photoinscription qui dure de to à t8 entre les instants to et tl puis entre les instants t7 et t8. La durée totale de la photoinscription est T = t8-t0. Le faisceau est initialement (à l'instant t0) totalement obturé par le dispositif (puissance de sortie nulle). La désobturation pendant la durée to-tl se fait par un aller X1-X2 du disopositif. L'obturation pendant la durée t7 - t8 se fait par le retour X2-X1 du dispositif. Le dispositif est immobile pendant la durée t1-t7.

Les figures 4 et 5 illustrent un mode de réalisation d'un dispositif d'apodisation selon l'invention.

Le dispositif comprend un cache rotatif 50 actionné par un moteur 51. Le cache 50 est monté sur un axe 52 et comporte selon cet exemple deux pales. Les pales tournent et occultent le faisceau UV pendant leur mouvement de rotation symbolisé par la flèche G pendant que le plateau se déplace suivant son axe de translation 12.

Les figures 6A et 6B représentent un deuxième mode de réalisation du cache rotatif 50. Selon ce mode, le cache rotatif est formé d'une pale ayant la forme d'un carré plein. La pale est mise en rotation autour de son axe 52.

Dans la suite de la description du phénomène, on suppose que le faisceau est fixe et se trouve au point X0=0.

Pendant le déplacement de la pale en carré vers la droite sur le plan de la figure 6A ou 6B la pale va obturer le faisceau jusqu'à l'abscisse X1 = r (r étant le rayon du cercle intérieur à la pale). Ceci est fonction de la grosseur (la largeur) du faisceau.

Lorsque le dispositif se déplace vers la droite sur l'axe X d'un point X1 au point X2 (X1 = R rayon du cercle extérieur au dispositif), le faisceau (en X0) est alternativement obturé puis libre du fait de la rotation de la pale.

Lorsque le dispositif a parcouru un trajet du point X2 au point X3 (X3>X2), le faisceau est libre et la puissance du faisceau reçue par le réseau est maximale.

Le déplacement en translation de la pale du point X1 au point X2 devant le faisceau se traduit par une variation de la puissance UV reçue par le guide pendant la durée correspondante qui est représentée par la courbe de la figure 7.

La figure 8 représente le profil de variation de puissance UV vue par le guide photoinscrit pour une pale ayant la forme représentée en figure 6. La longueur du réseau inscrit est l.

Durant l'inscription de la portion initiale o-e du réseau (cf. Fig. 8), la pale est déplacée dans le faisceau pendant une durée d sur un trajet aller X1 - X2 (cf. figures 6 et 7). Durant l'inscription de la portion terminale e'-l du réseau (cf. Fig. 8), la pale est redéplacée devant le faisceau pendant une durée d sur le trajet retour X2 - X1. Le profil de puissance obtenu correspond à un créneau à bords atténués.

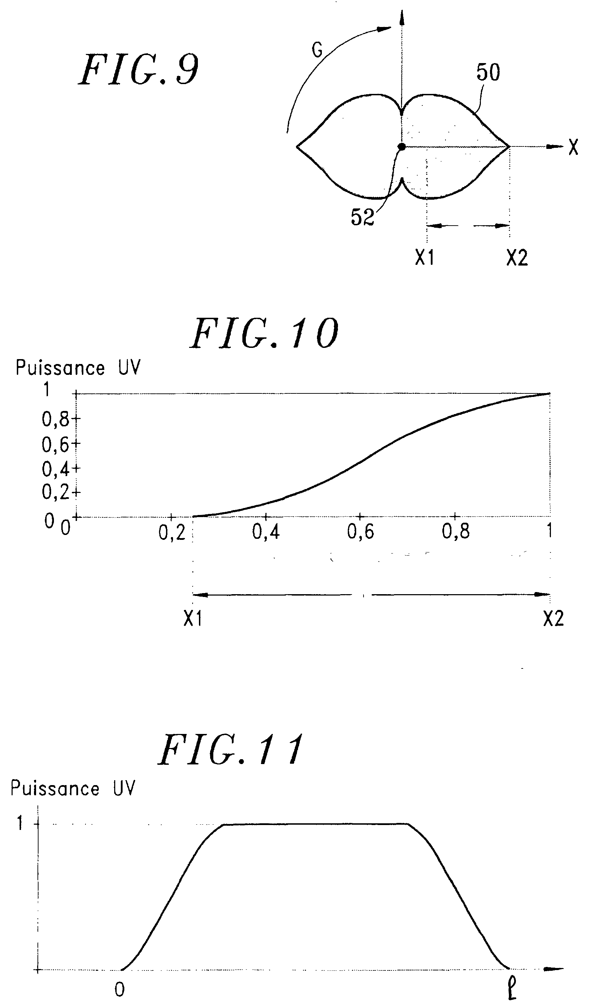

La figure 9 illustre un troisième mode de réalisation du cache rotatif 50. Selon cet exemple, le cache se présente sous forme d'une pale à double fer de pique. Cette forme particulière permet d'obtenir une atténuation sinusoïdale de la puissance tel que cela est illustré par la figure 10. Le profil de puissance UV vu par le guide pendant la photoinscription est représenté par la figure 11.

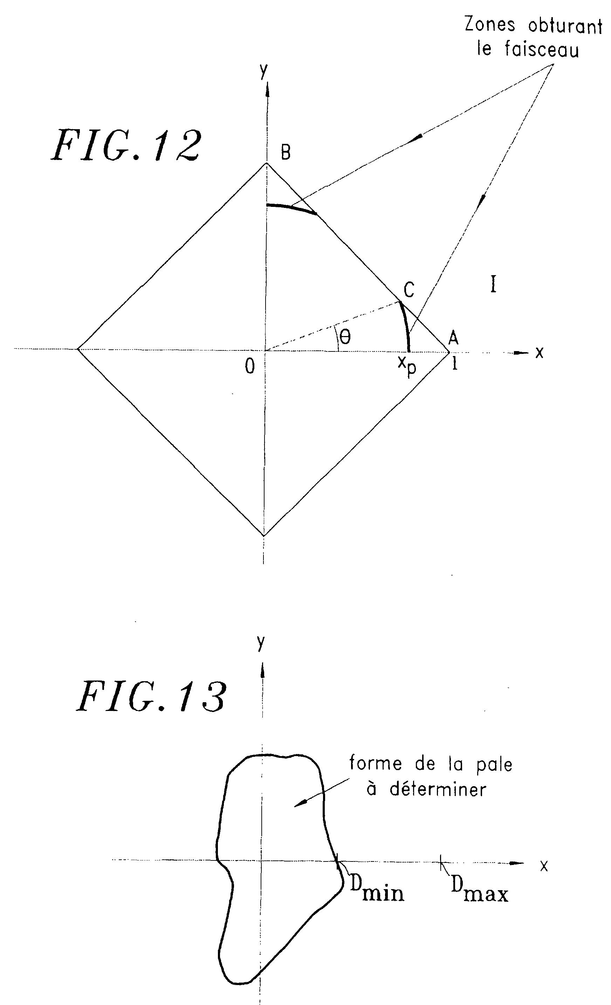

D'autres profils désirés peuvent être obtenus à partir de formes de pale différentes, les calculs du profil de puissance en fonction d'une forme donnée de pale ou l'inverse c'est à dire les calculs d'une forme de pale en fonction d'une forme désirée de profil de puissance sont donnés dans ce qui suit et illustrés respectivement par les figures 12 et 13.

On dénomme :

I ($X_p$) l'intensité du rayonnement UV au point $X_p$.

$P_{max}$ = la puissance incidente.

Calcul de l'intensité transmise dans le cas d'une pale carrée.

En considérant le 1/4 de la pale [ I: X>0 / Y>0]

L'intensité transmise par le dispositif (1/4 de la pale) au point $X_p$ est donnée par la relation :

$$I(X_p) = P_{max} \text{ [1- (longueur de l'axe de cercle obturant le}$$

$$\text{faisceau / périmètre du 1/4 de cercle de rayon } X_{p)}.]$$

soit :

$$I (X_p) = P_{max} [1 - 2\Theta X_p / \pi/2 X_p]$$

ou pour l'ensemble de la pale :

$$I(X_p) = P_{max} [ 1- 8\Theta X_p / 2\pi X_p]$$

Soit :

$$I(X_p) = P_{max} [ 1- 4 \Theta /\pi] \tag{1}$$

Calcul de $\Theta$

L'équation de la droite (AB) est y = - x + l
en passant en coordonnées polaires :
X = r cos $\Theta$
Z = r sin $\Theta$
L'équation de la droite devient :

$$r = l /(sin \Theta + cos\Theta) \tag{2}$$

avec $\Theta$ élément de [$\Theta$, 2 $\pi$]
Le point C a pour coordonnées : r Cos$\Theta$ ; r Sin$\Theta$
soit à l'aide de (2) /

C: $X_c$ = l/(sin$\Theta$ + Cos$\Theta$) Cos$\Theta$
$Y_c$ = l/(sin$\Theta$ + cos$\Theta$) Sin $\Theta$

On a

$$Sin\Theta = Y_c/X_p = l/(sin\Theta + cos\Theta) Sin \Theta (1/X_p)$$

En résolvant on obtient :

$$\Theta = arc\ sin\ (l/(racine(2)\ Xp)) - \pi/4$$

Soit:

$$I(x_p) = P_{max} [ 1 -(4arc\ sin(1/(racine(2)Xp))) - \pi)/\pi]$$

Calcul de la forme de la pale quand l'intensité transmise souhaitée est de forme sinusoïdale:

L'intensité "sinusoïdale" en sortie de la pale peut être donnée par la relation :

$$I(X_p) = P_{max} .[1 -(cos/\pi(X_p-D_{min} ))/D_{max}-D_{min}]$$

Dans le cas d'une pale possédant 2 axes de symétrie l'intensité est donnée par la relation:

$$I(X_p) = P_{max} [1-2\Theta/\pi] \tag{1}$$

Soit une valeur de $\Theta$

$$\Theta = \pi/2\ Cos\ [(\pi(X_p - D_{min})) / D_{max} - D_{min}] \tag{3}$$

La pale aura donc pour coordonnées polaires r et $\Theta$ telles que r est un élément de [$D_{min}$, $D_{max}$] et $\Theta = \pi/2$ Cos [($\pi(X_p - D_{min})$) / $D_{max}$ - $D_{min}$] le tracé est sur la figure 11.
Ces calculs seront avantageusement programmés pour permettre à l'homme de métier de déterminer la forme de la pale à choisir en fonction du profil désiré ou l'inverse.

# EP 0 884 613 B1

## Revendications

1. Banc de photoinscription pour la réalisation de réseaux de Bragg dans un guide optique (4) photosensible, comprenant

   - une source (1) de rayonnement ultraviolet (UV) apte à générer un faisceau de rayons UV pour insoler ledit guide photosensible,
   - un dispositif d'interférométrie (2), disposé sur le trajet dudit faisceau UV, pour générer des franges d'interférence aptes à photoinscrire un réseau de Bragg dans ledit guide disposé à proximité, et
   - un dispositif de masquage (10) disposé entre ladite source (1) et ledit dispositif d'interférométrie (2), ledit dispositif de masquage comportant un cache (50) déplaçable au travers dudit faisceau UV, ledit cache présentant une surface d'obturation de la lumière UV dont les bords ont une forme telle que ledit cache occasionne, dans son déplacement au travers dudit faisceau UV, une puissance d'insolation UV variable le long dudit guide, ledit banc étant caractérisé en ce que ledit cache déplaçable (50) est un cache monté rotatif dans ledit dispositif de masquage (10), l'axe de rotation dudit cache étant disposé sensiblement parallèlement à la direction longitudinale de la portion de faisceau UV au travers de laquelle il est destiné à être entraîné en rotation, et la forme des bords de la surface d'obturation dudit cache étant fonction de la position de ces bords par rapport audit axe de rotation.

2. Banc de photoinscription selon la revendication 1, caractérisé en ce que la forme desdits bords de la surface d'obturation dudit cache rotatif (50) est sélectionnée en fonction du profil désiré pour la puissance d'insolation UV en chaque point le long dudit guide.

3. Banc de photoinscription selon la revendication 1 ou 2, caractérisé en ce que

   - ladite source (1) est adaptée pour générer un faisceau UV étroit,
   - ledit banc comporte en outre des moyens de balayage (22) dudit faisceau UV étroit, et
   - ledit dispositif de masquage (20) est disposé en amont desdits moyens de balayage (22), et il comporte en outre des moyens (11) de déplacement translatif du cache rotatif pour rapprocher ou éloigner, en coordination avec ledit balayage dudit faisceau étroit, l'axe de rotation de ce cache rotatif (50) de la portion fixe de faisceau UV au travers de laquelle ledit cache est destiné à être entraîné en rotation.

4. Banc de photoinscription selon la revendication 3, caractérisé en ce que le cache rotatif est formé d'une pale (50) de forme carrée qui, lorsque ledit cache est mis en rotation et qu'il est déplacé en translation au travers du faisceau étroit, permet d'obtenir un profil en forme de créneau à bords atténués pour la puissance UV reçue par le guide.

5. Banc de photoinscription selon la revendication 3, caractérisé en ce que le cache rotatif est formé d'une pale (50) ayant la forme d'un double fer de pique qui, lorsque ledit cache est mis en rotation et qu'il est déplacé en translation au travers du faisceau étroit, permet d'obtenir un profil en créneau à bords sinusoïdaux pour la puissance UV reçue par le guide ou la fibre.

## Claims

1. Photo-imprinting apparatus for the production of Bragg gratings in a photosensitive optical guide (4), comprising

   - a source (1) of ultraviolet radiation (UV) suitable for generating a beam of UV rays to irradiate said photosensitive guide,
   - an interferometer device (2), disposed in the path of said UV beam, to generate interference fringes suitable for photo-imprinting a Bragg grating in said guide disposed in the vicinity, and
   - a masking device (10) disposed between said source (1) and said interferometer device (2), said masking device comprising a mask (50) displaceable across said UV beam, said mask exhibiting a surface for masking the UV light the edges of which have a form such that said mask, in the course of its displacement across said UV beam, produces a variable UV irradiation power along said guide, said apparatus being characterised in that said displaceable mask (50) is a mask mounted so that it can rotate in said masking device (10), the axis of rotation of said mask being disposed substantially parallel to the longitudinal direction of the portion of UV beam across which it is designed to be entrained in rotation, and the form of the edges of the masking surface of said mask being dependent on the position of these edges in relation to said axis of rotation.

**2.** Photo-imprinting apparatus according to claim 1, characterised in that the form of said edges of the masking surface of said rotary mask (50) is selected depending on the profile desired for the UV irradiation power at each point along said guide.

**3.** Photo-imprinting apparatus according to claim 1 or 2, characterised in that

- said source (1) is adapted to generate a narrow UV beam,
- said apparatus additionally comprises scaning means (22) for said narrow UV beam, and
- said masking device (20) is disposed upstream of said scanning means (22), and it additionally comprises means (11) for translative displacement of the rotary mask in order to move the axis of rotation of this rotary mask (50) closer to or further from the fixed portion of UV beam across which said mask is designed to be entrained in rotation, in co-ordination with said scaning of said narrow beam.

**4.** Photo-imprinting apparatus according to claim 3, characterised in that the rotary mask is formed by a blade (50) of square shape which, when said mask is set in rotation and displaced in translation across the narrow beam, makes it possible to obtain a profile in the form of a tooth with attenuated edges for the UV power received by the guide.

**5.** Photo-imprinting apparatus according to claim 3, characterised in that the rotary mask is formed by a blade (50 having the form of a double pike head which, when said mask is set in rotation and displaced in translation across the narrow beam, makes it possible to obtain a profile in the form of a tooth with sinusoidal edges for the UV power received by the guide or the fibre.

**Patentansprüche**

**1.** Vorrichtung zum lichtinduzierten Schreiben für die Herstellung von Bragg-Gittern in einem photosensiblen optischen Leiter (4), umfassend:

- eine UV-Strahlungsquelle (1), fähig ein UV-Strahlenbündel zu erzeugen, um den genannten photosensiblen Leiter zu bestrahlen,
- eine Interferometrie-Einrichtung (2), angeordnet auf dem Weg des genannten UV-Strahlenbündels, um Interferenzstreifen zu bilden, die sich dazu eignen, ein lichtinduziertes Bragg-Gitter in den in der Nähe angeordneten Leiter einzuschreiben, und
- eine Maskierungseinrichtung (10), angeordnet zwischen der genannten Quelle (1) und der genannten Interferometrie-Einrichtung (2), wobei die genannte Maskierungseinrichtung eine zu dem genannten UV-Strahlenbündel quer verschiebbare Abdeckung (50) umfasst, die eine Sperr- bzw. Blendenfläche für das UV-Licht aufweist, deren Ränder eine derartige Form haben, dass die Abdeckung bei ihrer Verschiebung quer zu dem UV-Strahlenbündel eine längs des genannten Leiters variable UV-Bestrahlungsleistung bewirkt,

wobei diese Vorrichtung **dadurch gekennzeichnet** ist, dass die verschiebbare Abdeckung (50) eine drehbar in die genannte Maskiereinrichtung (10) montierte Abdeckung ist, wobei die Rotationsachse dieser Abdeckung im Wesentlichen parallel zu der Längsrichtung des Teils des UV-Strahlenbündels angeordnet ist, in dem diese Abdeckung rotiert, und die Form der Ränder der Sperr- bzw. Blendenfläche der Abdeckung von der Lage dieser Ränder in Bezug auf die genannte Rotationsachse abhängig ist.

**2.** Vorrichtung zum lichtinduzierten Schreiben nach Anspruch 1, dadurch gekennzeichnet, dass die Form der genannten Ränder der Sperr- bzw. Blendenfläche der rotierenden Abdeckung (50) in Abhängigkeit von dem in jedem Punkt längs des genannten Leiters erwünschten Leistungsprofil der UV-Bestrahlung selektioniert wird.

**3.** Vorrichtung zum lichtinduzierten Schreiben nach Anspruch 1 oder 2, dadurch gekennzeichnet:

- dass die genannte Quelle (1) fähig ist, ein schmales UV-Strahlenbündel zu erzeugen,
- dass die Vorrichtung außerdem Abtasteinrichtungen (22) des genannten schmalen UV-Strahlenbündels umfasst,
- dass die genannte Maskierungseinrichtung (10) vor den genannten Abtasteinrichtungen (22) angeordnet ist und dass sie auch Parallelverschiebungseinrichtungen (11) der rotierenden Abdeckung umfasst, um in Koordination mit der Abtastung des schmalen Strahlenbündels die Rotationsachse der rotierenden Abdeckung (50) dem feststehenden bzw. stationären Teil des UV-Strahls, in dem diese Abdeckung rotiert, anzunähern oder von diesem zu entfernen.

4.  Vorrichtung zum lichtinduzierten Schreiben nach Anspruch 3, dadurch gekennzeichnet, dass die rotierende Abdeckung durch ein Blatt (50) von quadratischer Form gebildet wird, das ermöglicht, wenn die Abdeckung rotiert und translatorisch quer durch das schmale Strahlenbündel verschoben wird, für die durch den Leiter empfangene UV-Leistung ein impulsförmiges Profil mit gedämpften Rändern zu erhalten.

5.  Vorrichtung zum lichtinduzierten Schreiben nach Anspruch 3, dadurch gekennzeichnet, dass die rotierende Abdeckung durch ein Blatt (50) gebildet wird, das die Form einer doppelten Lanzenspitze aufweist, die ermöglicht, wenn die Abdeckung rotiert und translatorisch quer durch das schmale Strahlenbündel verschoben wird, für die durch den Leiter oder die Faser empfangene UV-Leistung ein impulsförmiges Profil mit sinusförmigen Rändern zu erhalten.

## FIG.1

## FIG.2

# FIG.3

EP 0 884 613 B1

# *FIG.4*

# *FIG.5*

*FIG.6A*

G

50

r

R

X0    X1   X2  X3

— X

*FIG.6B*

50

— X

X1-X0

X2-X1

X3-X2

52

*FIG.7*

0<X<X1          X1                          X2

*FIG.8*

Puissance UV

0  e                                    e'

## FIG.9

## FIG.10

Puissance UV

## FIG.11

Puissance UV

Zones obturant
le faisceau

*FIG.12*

B

C

I

θ

A

0

$x_p$

1

x

y

*FIG.13*

y

forme de la pale
à déterminer

$D_{min}$

$D_{max}$

x